Europäisches Patentamt

European Patent Office

Office européen des brevets

(11) Publication number: **0 333 053 B1**

(12) **EUROPEAN PATENT SPECIFICATION**

(45) Date of publication of patent specification: **03.03.93** (51) Int. Cl.⁵: **C09K 11/02**, H05B 33/14

(21) Application number: **89104254.1**

(22) Date of filing: **10.03.89**

(54) Phosphate-coated electroluminescent phosphor for electroluminescent lamp and a process for producing the same.

(30) Priority: **17.03.88 JP 64910/88**

(43) Date of publication of application:
**20.09.89 Bulletin 89/38**

(45) Publication of the grant of the patent:
**03.03.93 Bulletin 93/09**

(84) Designated Contracting States:
**DE FR**

(56) References cited:
DE-A- 1 922 397
DE-A- 2 744 763
FR-A- 2 144 744

**DATABASE DERWENT WORLD PATENT IN-DEX, AN 84-116716 (19); "Fluorescent material used on colour television screens - obtd. by coating yttrium oxy:sulphide activated with terbium or europium with barium phosphate", & JP-A-59 053 579 (TOKYO SHIBAURA DENKI K.K.) 28-03-1984**

(73) Proprietor: **SUMITOMO CHEMICAL COMPANY, LIMITED**
**Kitahama 4-chome 5-33**
**Chuo-ku Osaka 541(JP)**

(72) Inventor: **Kadokura, Hidekimi**
**11-25, Hoshigoecho**
**Niihama-shi(JP)**
Inventor: **Fujii, Hideyo**
**13-59, Nakamura-4-chome**
**Niihama-shi(JP)**
Inventor: **Tanahashi, Masayoshi**
**14-8, Tanoue-2-chome**
**Niihama-shi(JP)**

(74) Representative: **Henkel, Feiler, Hänzel & Partner**
**Möhlstrasse 37**
**W-8000 München 80 (DE)**

## Description

The present invention relates to a phosphate-coated electroluminescent phosphor for ac powder electroluminescent lamps (hereafter referred to as "EL lamp") and a process for producing the same.

More particularly, the present invention relates to a phosphate-coated electroluminescent phosphor for EL lamps having an improved moisture resistance and a long life, obtained by coating a phosphor with specific phosphates, and to a process for producing the same.

In recent years, EL lamps mainly using zinc sulfide as a phosphor have been recommended as a back light for display equipments since they have such merits that they exhibit a uniform luminance over a wide area and they are lightweighted.

However, such phosphors encounter such demerits that they are so sensitive to humidity that their luminance rapidly decreases by the moisture coming from the outside.

Therefore, conventionally used electroluminescent phosphors are designed to provide on a back electrode an insulating layer, a phosphor layer composed of a mixture of an organic binder having a high dielectric constant and a phosphor such as zinc sulfide, etc. and a transparent electrode layer, and the whole system being covered with a moisture-proofing film so as to prevent the penetration of moisture. However, the surface of the phosphor layer is gradually blackened and deteriorated to cause reduction of luminance, when exposed to high humidity over a long period of time.

This tendency is particularly remarkable under irradiation with UV rays, resulting in marked reduction in life of EL lamps.

In order to eliminate such shortcomings, it has been proposed to cover the phosphor with a variety of moisture-proofing materials, whereby moisture resistance is imparted to the phosphor to prolong its life.

For example, JP-A-58-150294 teaches that a life of phosphor powders can be prolonged by coating the powders with a dense insulating material such as silicon nitride, silicon oxide, yttrium oxide, barium titanate, etc. so as to prevent invasion of water molecules or various ions from the outside into the phosphor.

Further, JP-B-60-14054 discloses that water-proofing property and chemical stability of the phosphor can be improved by taking a three-layered structure comprising, in succession, an alkaline earth chalcogenide phosphor having been provided on the surface thereof a layer of an oxide of an alkaline earth metal and a moisture resistant oxide layer in contact with the alkaline earth metal oxide. Furthermore, USP 4,181,753 describes a zinc phosphate-coated phosphor by the reaction of a zinc sulfide phosphor itself with phosphoric acid, which EL lamp has an impermeable insulating property.

However, even these improved methods fail to provide phosphors satisfying the life required for commercial products (for example, the luminance of the lighted phosphor should not decrease to less than 10 nt even after 1500 hours).

Database Derwent World Patent Index, AN 84-116716 (19) teaches that addition of barium phosphate improves the dispersibility of a fluorescent material for color television screens obtained by coating barium phosphate on the surface of a fluorescent matrix comprising Tb- or Eu-activated $Y_2O_2S$ or a fluorescent matrix comprising Eu-activated $Y_2O_2S$ coated with red iron oxide in the dispersion used at the time of formation of a fluorescent film on a glass panel.

DE-A-1 922 397 teaches that an increase in light output is obtained when calcium halophosphate phosphor particles are coated with a layer of calcium phosphate prior to making the phosphor into a suspension used to coat the inside of a fluorescent lamp envelope.

DE-A-2 744 397 teaches the provision of blue-emitting cathode ray phosphor by coating a silver-activated zinc sulfide particles with a haze resistant coating of magnesium pyrophosphate, aluminum pyrophosphate and silicon dioxide. The blue-emitting cathode ray phosphor is used for tricolor television pciture tubes.

FR-A-2 144 744 teaches the provision of a luminescent material by coating particles of a luminescent silicate with an alkaline earth metal hydrogen phosphate or a phosphate formed by heating an alkaline earth metal hydrogen phosphate. The luminescent material is suitable for use in low-pressure mercury vapor discharge lamps since the application of the material to the lamps improves not only the initial luminous flux but also the durability of the luminous flux.

According to the present invention, there are provided a phosphate-coated electroluminescent zinc sulfide phosphor (in the following only designated as "phosphor") for EL lamp comprising a zinc sulfide phosphor coated with a phosphate of at least one metal selected from the group consisting of magnesium, calcium, strontium and barium, and a process for producing a phosphor for EL lamp coated with a phosphate of at least one metal selected from the group consisting of magnesium, calcium, strontium and barium, which comprises dispersing a zinc sulfide phosphor in an aqueous solution containing phosphate ions and alkali metal ions and/or ammonium ions, adding an aqueous solution of a salt of at least one metal

2

selected from the group consisting of magnesium, calcium, strontium and barium to the resulting slurry while maintaining the pH value of the resulting mixture at 4 or more, coating the metal phosphate on the phosphor, then filtering off the coated phosphor from the mixture, washing the coated phosphor with water and then calcining the coated phosphor.

In the present invention, the phosphate used to cover the phosphor for EL lamps refers to magnesium phosphate, magnesium hydrogenphosphate, calcium phosphate, calcium hydrogenphosphate, barium phosphate, strontium phosphate, calcium pyrophosphate, strontium pyrophosphate, barium pyrophosphate, calcium magnesium phosphate, strontium magnesium phosphate, barium magnesium phosphate, calcium magnesium pyrophosphate, strontium magnesium pyrophosphate, barium magnesium pyrophosphate, strontium calcium magnesium phosphate, barium calcium magnesium phosphate, strontium calcium magnesium pyrophosphate, barium calcium magnesium pyrophosphate, barium strontium calcium magnesium phosphate, barium strontium calcium magnesium pyrophosphate, strontium calcium phosphate, barium calcium phosphate, strontium calcium pyrophosphate, barium calcium pyrophosphate, barium strontium calcium phosphate, barium strontium calcium pyrophosphate, etc.; or composite phosphates thereof or condensed phosphates thereof and/or mixed phosphates thereof. Of these, preferred are calcium magnesium phosphate, magnesium phosphate, magnesium hydrogenphosphate, calcium phosphate, strontium phosphate, barium phosphate, strontium magnesium phosphate, barium magnesium phosphate, strontium calcium magnesium phosphate, barium calcium magnesium phosphate and barium strontium calcium magnesium phosphate.

In general, electroluminescent phosphors used for EL lamps have a variety of mean particle diameters and, as a matter of course, have a variety of size distributions. Therefore, in the case of coating the phosphors with these phosphates, it is impossible to adhere onto the respective phosphor particles in a uniform layer thickness by a method which comprises coating the phosphates onto the surface of phosphor in a slurry. However, the coated amount of the phosphate onto the phosphor can be expressed in terms of the quantity of phosphate. In the case where the mean particle diameter of the phosphor is about 30 $\mu$m and the metal phosphate is magnesium phosphate, for example, the coating amount ratio of magnesium phosphate to the phosphor is generally about 0.05 : 100 to about 13 : 100, preferably about 0.1 : 100 to about 10 : 100. In the case where the mean particle diameter is about 3 $\mu$m, the ratio is generally about 0.5 : 100 to about 130 : 100, preferably about 1 : 100 to about 100 : 100. Further, in the case where the mean particle diameter of the phosphor is about 10 $\mu$m, the ratio is generally about 0.15 : 100 to about 40 : 100, preferably about 0.3 : 100 to about 30 : 100. Furthermore, in the case where the mean particle diameter of the phosphor is about 60 $\mu$m, the ratio is generally in the range of about 0.025 : 100 to about 6.5 : 100, preferably about 0.05 : 100 to about 5 : 100.

Thus, the coating amount ratio of the metal phosphate to the phosphor depends on the mean particle diameter of the phosphor to be coated. However, in the case a commercially available phosphor is used, it is recommended to coat the phosphor in the amount range satisfying the inequality;

$$0.007 \cdot \frac{d}{D_{50}} \cdot W_p \leqq W_c \leqq 1.5 \cdot \frac{d}{D_{50}} \cdot W_p$$

wherein $W_c$ represents the weight of coating metal phosphate (g), d the density of coating metal phosphate (g/cm³), $D_{50}$ the mean particle diameter of the phosphor and $W_p$ the weight of phosphor (g), preferably,

$$0.015 \cdot \frac{d}{D_{50}} \cdot W_p \leqq W_c \leqq 1.2 \cdot \frac{d}{D_{50}} \cdot W_p$$

wherein $W_c$, d, $D_{50}$ and $W_p$ represent the same meanings as defined above.

The thickness of the layer coated onto the phosphor in the above coating amounts cannot be primarily determined since the phosphor has a size distribution as described above. However, when the mean particle diameter of the phosphor falls in the range from about 3 to about 60 $\mu$m, the layer thickness is generally about 0.005 $\mu$m to about 1 $\mu$m, preferably about 0.01 $\mu$m to about 0.8 $\mu$m. On the phosphor having a mean particle diameter in the above range, the metal phosphate may be coated so as to have a thickness of the layer of the metal phosphate falling in the above-mentioned range.

In the present invention, the coating amount is not critical. However, in the case the coating amount is less than the lower limit described above, the effect of improving the moisture resistance of the phosphor may be poor. On the other hand, as the amount of the coated phosphate becomes large, the moisture resistance is improved but the luminance is reduced. Therefore, it is preferred that the coating amount be in the range described above.

In the present invention, the phosphate-coated phosphor for EL lamp is obtained by dispersing an electroluminescent phosphor in an aqueous solution containing phosphate ions and alkali metal ions and/or ammonium ions (hereafter referred to as phosphate-supplying aqueous solution), adding an aqueous solution of the metal salt to the resulting slurry, while maintaining the pH value of the resulting mixture at 4 or more, coating the metal phosphate on the phosphor, then filtering off the coated phosphor from the mixture, washing the coated phosphor with water and then calcining the coated phosphor.

The phosphate-supplying aqueous solution may be prepared by dissolving one or more alkali metal phosphates or ammonium phosphates in water, or by mixing an aqueous solution containing phosphate ions, an aqueous solution containing alkali metal ions and/or an aqueous solution containing ammonium ions. As the phosphate-supplying aqueous solution, there can be used aqueous solutions of alkali phosphates such as tripotassium phosphate, dipotassium phosphate, monopotassium phosphate, trisodium phosphate, disodium phosphate, monosodium phosphate, etc.; ammonium phosphates such as triammonium phosphate, diammonium phosphate, monoammonium phosphate, etc.; magnesium phosphate, phosphoric acid or the like.

As the alkali metal ion source, there can be used aqueous solutions of potassium hydroxide or sodium hydroxide; as the ammonium ion source, ammonia water and the like can be used. In the case that necessary amounts of the alkali metal ions or ammonium ions has already been present in the aqueous solution containing phosphate ions, of course, it is unnecessary to further add an alkali metal ions aqueous solution or an aqueous solution containing ammonium ions.

The phosphate ion concentration in the phosphate-supplying aqueous solution is not critical but generally in the range of about 0.01 to about 5% by weight, preferably about 0.03 to 1% by weight, when calculated as $H_3PO_4$.

The alkali metal ion and/or ammonium ion concentration in the phosphate-supplying aqueous solution is not critical but generally in the range of about 5 to 500 mmol/l, preferably about 10 to 200 mmol/l.

The starting metal salts include chlorides and nitrates of magnesium, calcium, strontium and barium; water soluble inorganic acid salts such as magnesium sulfate, etc.; and water soluble organic acid salts such as acetates of the metals described above. Specific examples thereof are chlorides such as magnesium chloride, calcium chloride, strontium chloride and barium chloride, etc.; nitrates such as magnesium nitrate, calcium nitrate, strontium nitrate and barium nitrate, etc.; sulfates such as magnesium sulfate, etc.; acetates such as magnesium acetate, calcium acetate, strontium acetate, barium acetate, etc.

The above inorganic acid salt and organic acid salt may be used alone or in combination of two or more.

The metal ion concentration in the metal salt aqueous solution is not critical but generally in the range of about 0.01 to about 10% by weight, preferably about 0.05 to about 5% by weight.

In general, once the metal salt aqueous solution is added to the slurry containing the phosphor in phosphate-supplying aqueous solution, the reaction immediately occurs and forms a coating onto the phosphor. Accordingly, the amounts of the starting materials added are almost identical with the coating amount in many cases. However, it is recommended to previously evaluate the amount of the phosphate coated on the phosphor in a prescribed composition of the starting materials, by a simple preliminary experiment, prior to the reaction.

In the process of the present invention, the alkali metal ions and/or ammonium ions present in the phosphate-supplying aqueous solution are required to be used in stoichiometrical amounts sufficient to neutralize free acids formed from the starting metal salts, which acid is by-produced in the reaction of the phosphate ion-containing aqueous solution and the metal salt aqueous solution. A pH value of the phosphor-dispersed slurry has been previously adjusted to about 4 to about 10.

In the case the amount of alkali metal ions and/or ammonium ions necessary for neutralizing the free acids by-produced is insufficient, the phosphate is coated onto the phosphor in a low yield and the remaining free acids react further with the phosphor to by-produce hydrogen sulfide. As the result, no uniform phosphate coating onto the surface of the phosphor can be obtained. On the other hand, where the alkali metal ions and/or ammonium ions are excessively present in the reaction mixture after the reaction has been completed, the phosphate formed by the reaction is hardly coated onto the surface of the phosphor and is released into the aqueous solution or the phosphate deposits on the surface of the phosphor as phosphate masses. In this case, the effect of improving the moisture resistance of the resulting phosphor becomes poor and its luminance decreases, which are not desired.

In the present invention, the process is carried out with preventing the reaction mixture from becoming strongly acidic (pH of less than about 4) during the reaction progress (from initiation to completion, of the reaction) between the phosphate-supply aqueous solution and the metal salt aqueous solution. In general, there can be utilized a method in which an equimolar amount of the alkali metal ions and/or ammonium ions have previously been allowed to be present in the slurry prior to the reaction or a method in which an aqueous solution containing the alkali metal ions and/or ammonium ions is added to the reaction mixture while monitoring the pH of the mixture during the reaction thereby to control the pH value, or the like. When the pH of the reaction mixture after completion of the reaction is generally larger than 4 or more, it can be regarded that the pH would be kept at about 4 or more also during the reaction. In order to effect the coating uniformly in a good yield, it is desirable to incorporate the alkali metal ions and/or ammonium ions co-existing with the phosphate ions, in such a way that the pH of the reaction mixture during the course of the reaction falls in the range of about 4 to about 10, preferably about 5 to about 8, more preferably about 6 to about 7.

The amount of the electroluminescent phosphor to be dispersed in the phosphate-supplying aqueous solution is not critical. However, it is generally in the range of about 1 to about 40% by weight, preferably about 1 to about 30% by weight, based on the aqueous solution.

The lesser the amount of the phosphor dispersed in the aqueous solution is, more uniformly can the phosphate be coated onto the phosphor surface and the resulting phosphate-coated phosphor can exhibit more improved moisture resistance.

When the amount of the phosphor added to the aqueous solution exceeds about 40% by weight, it tends to be difficult to form a uniform dispersion. For this reason, uniform coating of the formed phosphate onto the phosphor surface tends to be difficult.

A method, device and conditions for uniformly dispersing the phosphor in the aqueous solution may vary since the dispersion state depends upon shape of a container, shape of an agitation blade, an agitation rate, particle diameter of the electroluminescent phosphor and size distribution, etc. Known stirring machines and agitation techniques may be appropriately chosen in such a manner that a good and uniform dispersion is obtained throughout the whole procedures from the on set of the reaction to the cooling treatment.

The amount of the starting metal salt aqueous solution to be incorporated into the phosphate-supplying aqueous solution is about 5 to about 100 parts by volume, preferably about 7 to about 20 parts by volume, per 100 parts by volume of the phosphate-supplying aqueous solution. In this case, the phosphate concentration in the phosphate-supplying aqueous solution falls in the range of about 0.01 to about 5% by weight, when calculated as $H_3PO_4$, and the metal salt concentration in the starting metal salt aqueous solution ranges from about 0.01 to 10% by weight, when calculated as metal salt ignoring crystal water. The amounts used and concentrations of these aqueous solutions may be determined within the above-described ranges in view of the intended amount of metal phosphate coating on the phosphor.

As the concentration of the phosphate formed by the reaction between the phosphate-supplying aqueous solution and the metal salt aqueous solution becomes lower, the formed phosphate can uniformly cover the phosphor surface and this is recommended.

However, even in the case of incorporating the aqueous solution containing a necessary amount of the metal salt in a high concentration, the limit is about 5 parts by volume. With a higher concentration and a smaller volume, the formed phosphate tends to form agglomerated particles, so that the phosphate is released into the aqueous solution or deposits on the surface of the phosphor as phosphate masses. As a result, the effect of improving the moisture resistance of the resulting phosphor becomes poor and its luminance decreases, which are not desired.

On the other hand, in the case the aqueous solution containing a necessary amount of the metal salt is incorporated in a larger volume than 100 parts by volume, such a manner of addition is not only useless but also a waste of labor since the improvement in uniform coating hits the ceiling as compared with a more moderate addition.

The reaction is initiated by adding the metal salt aqueous solution to the slurry of the phosphor in the phosphate-supplying aqueous solution.

It is recommended to slowly add the metal salt aqueous solution to the phosphate-supplying aqueous solution, intending to uniformly disperse the metal phosphate formed in the slurry. Although the rate of the addition depends upon the properties of the materials used, it cannot be easily determined. However, for example, about 5 parts by volume of the metal salt aqueous solution may be added to 100 parts by volume of the phosphate-supplying aqueous solution, in which the phosphor has been dispersed, generally over 10 minutes or longer. Such a manner of addition is desirable because, as the addition takes a longer period of time, the formed phosphate can cover the phosphor more uniformly.

The reaction temperature is not critical but usually ranges from room temperature to about 80°C, preferably from room temperature to about 60°C. In general, the reaction proceeds sufficiently at room temperature; however it is also possible to carry out the reaction by heating the aqueous solution at a temperature between a temperature higher than room temperature and a temperature around which steam bubbles begin to appear in the aqueous phase.

The mixture to which the metal salt aqueous solution has been added can be subsequently subjected to heat treatment at a temperature from a temperature higher than the reaction temperature to about 100°C, preferably from about 80 to about 100°C, for about 0.5 to about 3 hours.

The heat treatment may serve to complete the deposition and coating of the phosphate formed by the reaction onto the phosphor and at the same time, may serve to aging, whereby the phosphate is coated onto the phosphor more smoothly and more uniformly.

While maintaining the dispersion of the whole particles, the heat treatment may follow cooling of the reaction mixture; the mixture is then filtered and washed with water in a conventional manner.

The phosphor after the filtration and rinsing is then dried at room temperature to about 150°C, by appropriately choosing the drying method from air-drying, hot air-drying, vacuum-drying, etc. The phosphor is further calcined to form a denser phosphate layer thereon.

It is desired that the calcination be conducted at a high temperature not causing reduction of a luminance of the phosphor. The phosphate-coated phosphor for EL lamp according to the present invention transits from an amorphous state to a crystalline state at about 600° to about 700°C. Therefore, the maximum temperature of the calcination is set within the temperature range up to this phase transition point, generally about 150° to about 300°C. The calcination is carried out within the temperature range for about 0.5 to about 2 hours. The calcination may be carried out in the air or in an inert gas such as nitrogen, argon, etc.

Further, in order to obtain the denser phosphate layer with minimized defects, it is, of course, possible to repeatedly conduct the coating. In this case, the moisture resistance can further be improved.

In practice of the present invention, it is also possible to coat or use iron phosphates, manganese phosphate, chromium phosphate, cerium phosphate, zinc phosphate, etc. as coloring pigments and/or ultraviolet absorbers within a range not lowering the moisture resistance.

The phosphate-coated phosphor for EL lamp of the present invention has a higher moisture resistance than the conventional phosphors. Therefore, the phosphor of the present invention is applicable, as a long-life EL lamp, to back light for word processors, a panel light for air crafts, a panel light for interior use in automobiles, weather proofing panel light for exterior use in automobiles, all purpose use as panel light and hence, the industrial value is extremely great.

The following examples serve to give specific illustrations of the practice of the present invention but they are not intended in any way to limit the scope of the present invention.

The moisture resistance test and blackening resistance test used in the examples and comparative examples were carried out in the following manner.

Moisture resistance test:

The EL lamp was kept in a thermostat at a temperature of 65°C under a humidity of 95% RH for 100 hours. The lamp was then continuously lighted by driving at 115 V and 400 Hz at 23°C, 40-60% RH. Its initial luminance [nt], half life [hr] and 10 nt life [hr] (time until the luminance reaches 10 nt) were determined.

Blackening resistance test:

0.200 Gram of the electroluminescent phosphor sample, 0.100 g of castor oil and 13 $\mu$l of 23% by volume water-ethanol solution were kneaded. A light was allowed to emit for 30 minutes by driving at 200 V and 400 Hz under irradiation from a UV lamp named UVL-56, in a light emission cell having a thickness of 50 $\mu$m. Thereafter, blackening change of the phosphor particles was examined. A blackened sample was expressed by x and a non-blackened sample by o.

In the examples, parts are all by weight unless otherwise indicated.

Example 1

0.71 Gram of triammonium phosphate trihydrate, was dissolved in 600 ml of ion-exchanged water. The solution was charged together with 100 g of a commercially available zinc sulfide type electroluminescent phosphor (mean particle diameter of 30 $\mu$m) in a 1-liter separable flask and stirred to disperse the phosphor with a paddle agitation blade. The slurry had a pH of about 9.

Thereto were carefully added 75 ml of a solution of 0.53 g of magnesium chloride hexahydrate and 0.39 g of calcium chloride dihydrate in ion-exchanged water over 45 minutes (reaction temperature : about 20°-40°C). Then, the mixture was heated to 90° to 100°C and refluxed for an hour.

With continuing the agitation, the reaction mixture was cooled; at this time, the pH was about 6.

The resulting phosphate-coated electroluminescent phosphor was subjected to solid-liquid separation. Then, the phosphor was washed with 1 liter of ion-exchanged water, dried at a temperature of 130°C for an hour and ground.

Then, the phosphor was calcined at a temperature of 150°C for an hour and further at a temperature of 250°C for an hour. Thus, a calcium magnesium phosphate-coated (0.45 part per 100 parts of the phosphor) electroluminescent phosphor was obtained.

The coating treatment described above was further repeated on the thus obtained phosphor once again to give a calcium magnesium phosphate-coated (0.9 part per 100 parts of the phosphor) electroluminescent phosphor (two-layer coating).

Subsequently, an insulating layer of a composition composed of BaTiO$_3$ and a cellulosic resin having a high dielectric constant was formed on an aluminum thin plate as a back electrode. A mixture of 15 parts of a cellulosic resin having a high dielectric constant (dielectric constant of 18), 45 parts of dimethylformamide and 40 parts of the calcium magnesium phosphate-coated phosphor described above was coated on the insulating layer by the doctor blade method. Thereafter, the system was dried by heating at a temperature of 130°C for 10 minutes to obtain a phosphor layer having a thickness of 50 $\mu$m. For moisture-proofing, the whole system was further covered with a polychlorotrifluoroethylene film.

With respect to the thus obtained EL lamp, the moisture resistance test of the EL lamp and blackening resistance test of the phosphate-coated electroluminescent phosphor were conducted. The results are shown in Table 1.

Example 2

Triammonium phosphate trihydrate, 0.77 g, was dissolved in 600 ml of ion-exchanged water and the resulting solution was charged in a 1-liter separable flask together with 100 g of the same electroluminescent phosphor as used in Example 1 and stirred to disperse the phosphor with a paddle agitation blade. The slurry had a pH of about 9.

Thereto were carefully added 75 ml of a solution of 1.16 g of magnesium chloride hexahydrate in ion-exchanged water over 45 minutes (reaction temperature : about 20° - 40°C). Then, the mixture was heated to 90° to 100°C and refluxed for an hour.

With continuing the agitation, the reaction slurry was cooled; at this time, the pH was about 7.

Subsequently, the same procedure as in the former stage in Example 1 was repeated (two-layer coatings) to give a magnesium phosphate-coated (0.8 part per 100 parts of the phosphor) electroluminescent phosphor.

The moisture resistance test of the EL lamp obtained in the same manner as in Example 1 from this phosphate-coated electroluminescent phosphor and blackening resistance test of the phosphate-coated electroluminescent phosphor were performed. The results are shown in Table 1.

Example 3

Triammonium phosphate trihydrate, 1.43 g, was dissolved in 600 ml of ion-exchanged water and the solution was charged in a 1-liter separable flask together with 100 g of the same electroluminescent phosphor as used in Example 1 and stirred to disperse the phosphor with a paddle agitation blade. The slurry had a pH of 9.

Thereto were carefully added 75 ml of a solution of 1.06 g of magnesium chloride hexahydrate and 0.77 g of calcium chloride dihydrate in ion-exchanged water over 45 minutes (reaction temperature: about 20°-40°C). Then, the mixture was heated to 90° to 100°C and refluxed for an hour.

With continuing the agitation, the reaction mixture was cooled; at this time, the pH was about 6.

Subsequently, the same procedure as the former stage in Example 1 was carried out (one-layer coating) to give a calcium magnesium phosphate-coated (0.9 part per 100 parts of the phosphor) electroluminescent phosphor.

The moisture resistance test of the EL lamp obtained in the same manner as in Example 1 from this phosphate-coated electroluminescent phosphor and blackening resistance test of the phosphate-coated electroluminescent phosphor were performed. The results are shown in Table 1.

Example 4

Triammonium phosphate trihydrate, 1.55 g, was dissolved in 600 ml of ion exchange water and the solution was charged in a 1-liter separable flask together with 100 g of the same electroluminescent phosphor as used in Example 1 and stirred to disperse the phosphor with a paddle agitation blade. The slurry had a pH of about 9.

Thereto were carefully added 75 ml of a solution of 2.32 g of magnesium chloride hexahydrate in ion-exchanged water over 45 minutes (reaction temperature : 20° - 40°C). Then, the mixture was heated to 90° to 100°C and refluxed for an hour.

With continuing the agitation, the reaction mixture was cooled; at this time, the pH was about 7.

Subsequently, the same procedure as in the former stage in Example 1 was carried out (one-layer coating) to give a magnesium phosphate-coated (0.8 part per 100 parts of the phosphor) electroluminescent phosphor.

The moisture resistance test of the EL lamp obtained in the same manner as in Example 1 from this phosphate-coated electroluminescent phosphor and blackening resistance test of the phosphate-coated electroluminescent phosphor were performed. The results are shown in Table 1.

Example 5

1 mol/l Phosphoric acid aqueous solution, 7.62 ml, and 22.8 ml of 1 mol/l potassium hydroxide aqueous solution were diluted with ion-exchanged water to make the whole volume 600 ml. The diluted solution was charged in a 1-liter separable flask together with 100 g of the same electroluminescent phosphor as used in Example 1 and stirred to disperse the phosphor with a paddle agitation blade. The slurry had a pH of about 9.

Thereto were carefully added 75 ml of an aqueous solution of 2.45 g of magnesium acetate tetrahydrate over 45 minutes (reaction temperature : 25° - 50°C). Then, the mixture was heated to 90° to 100°C and refluxed for an hour.

With continuing the agitation, the reaction slurry was cooled; at this time, the pH was about 7.

Hereafter, the same procedure as in Example 1 was repeated (two-layer coating) to give a phosphate-coated (1.6 parts per 100 parts of the phosphor) electroluminescent phosphor.

The moisture resistance test of the EL lamp obtained in the same manner as in Example 1 from this phosphate-coated electroluminescent phosphor and blackening resistance test of the phosphate-coated electroluminescent phosphor were performed. The results are shown in Table 1.

Example 6

1 mol/l Phosphoric acid aqueous solution, 19.0 ml, and 57 ml of 1 mol/l ammonia aqueous solution were diluted with ion-exchanged water to make the whole volume 600 ml. The diluted solution was charged in a 1-liter separable flask together with 100 g of the same electroluminescent phosphor as used in Example 1 and stirred to disperse the phosphor with a paddle agitation blade. The slurry had a pH of about 9.

Thereto were carefully added 75 ml of an aqueous solution of 5.80 g of magnesium chloride hexahydrate in ion-exchanged water over 45 minutes (reaction temperature : 20° - 50°C). Then, the mixture was heated to 90° to 100°C and refluxed for an hour.

With continuing the agitation, the reaction mixture was cooled; at this time, the pH was about 7.

Subsequently, the same procedure as in Example 1 was repeated (two-layer coating) to give a phosphate-coated (4.8 parts per 100 parts of the phosphor) electroluminescent phosphor.

The moisture resistance test of the EL lamp obtained in the same manner as in Example 1 from this phosphate-coated electroluminescent phosphor and blackening resistance test of the phosphate-coated electroluminescent phosphor were performed. The results are shown in Table 1.

Example 7

9.63 Grams of monosodium phosphate monohydrate were dissolved in 460 ml of ion-exchanged water. The solution was charged together with 100 g of a commercially available zinc sulfide type electroluminescent phosphor (mean particle diameter of 10 $\mu$m) in a 1-liter separable flask and stirred to disperse the phosphor with a paddle agitation blade. Then 140 ml of 1 mol/l aqueous ammonia was added thereto to adjust the pH of the slurry to about 10.

Thereto were added 75 ml of a solution of 10.6 g of magnesium chloride hexahydrate and 7.7 g of calcium chloride dihydrate in ion-exchanged water over 45 minutes (reaction temperature : 20° - 50°C). Thereafter, the mixture was heated to 90° - 100°C and refluxed for an hour.

With continuing the agitation, the reaction mixture was cooled; at this time, the pH was about 7.

Subsequently, the same procedure as in the former stage in Example 1 was repeated (two-layer coatings) to give a calcium magnesium phosphate-coated (20 parts per 100 parts of the phosphor) electroluminescent phosphor.

The moisture resistance test of the EL lamp obtained from the phosphate-coated electroluminescent phosphor and blackening resistance test of the phosphate-coated electroluminescent phosphor were carried out in the same manner as in Example 1. Table 1 shows the results.

Example 8

The same procedure (two-layer coatings) as in Example 1 was repeated with the materials shown in Table 1 except that the commercially available zinc sulfide type electroluminescent phosphor was replaced by that having a mean particle diameter of 50 $\mu$m to obtain a phosphate-coated electroluminescent phosphor shown in Table 1.

With the phosphor, an EL lamp was prepared with the same manner as in Example 1 and the moisture resistance test of the EL lamp was conducted. The blackening resistance test of the phosphate-coated electroluminescent phosphor was also carried out in the same manner as in Example 1. Table 1 shows the results.

Examples 9 through 20

The phosphate-coated electroluminescent phosphors shown in Table 1 were prepared according to the same procedure as in Example 1 (the same reaction temperature) with the same commercially available phosphors and the starting materials as shown in Table 1 (two-layer coating).

With the phosphors, EL lamps were prepared with the same manner as in Example 1 and the moisture resistance test of the EL lamps was conducted. The blackening resistance test of the phosphate-coated electroluminescent phosphors was also carried out in the same manner as in Example 1. Table 1 shows the results.

Example 21

The same procedure (two-layer coating) as in Example 1 was repeated with the materials shown in Table 1 except that the reaction temperature was 20°-60°C and the heat treatment after the reaction was neglected to obtain a phosphate-coated electroluminescent phosphor.

With the phosphor, an EL lamp was prepared and the moisture resistance test of the EL lamp and the blackening resistance test of the phosphate-coated electroluminescent phosphor were carried out in the same manner as in Example 1. Table 1 shows the results.

Comparative Example 1

The moisture resistance test of the EL lamp obtained by using the same commercially available zinc sulfide type electroluminescent phosphor as in Example 1 itself and the blackening resistance test of the electroluminescent phosphor were performed. The results are shown in Table 1.

Comparative Example 2

The same commercially available zinc sulfide type electroluminescent phosphor, 100 g, as used in Example 1 were charged in a 1-liter separable flask together with 600 ml of ion-exchanged water and stirred

9

to disperse the phosphor with a paddle agitation blade. Thereto were carefully added 0.60 g of 86% by weight phosphoric acid aqueous solution. The slurry had a pH of about 2. Then, the mixture was heated to 90° to 100°C and gently refluxed for an hour. At this stage, hydrogen sulfide gas evolved.

With continuing the agitation, the reaction slurry was cooled; at this time, the pH was about 3.

Subsequently, the same procedure as the former stage in Example 1 was repeated to give a phosphate-coated (zinc phosphate, about 0.7 part per 100 parts of the phosphor) electroluminescent phosphor.

The moisture resistance test of the EL lamp with this phosphate-coated electroluminescent phosphor and blackening resistance test of the phosphate-coated electroluminescent phosphor were performed in the same manner as in Example 1.

The results are shown in Table 1.

Comparative Example 3

The same commercially available zinc sulfide type electroluminescent phosphor, 20 g, as used in Example 1 were stirred and treated for an hour in 100 ml of isopropanol solution of tetraisopropoxytitanium and diisopropoxybarium (10% by weight as $BaTiO_3$) followed by filtering and air-drying. The phosphor was calcined in the air at a temperature of 150°C for an hour and then at 250°C for an hour to give a barium titanate-coated electroluminescent phosphor.

The blackening resistance test of the barium titanate-coated electroluminescent phosphor was performed.

The results are shown in Table 1.

Comparative Example 4

With the same commercially available zinc sulfide type electroluminescent phosphor as used in Example 7 (mean particle diameter: 10 $\mu$m), the moisture resistance test of the EL lamp and the blackening resistance test of the electroluminescent phosphor were carried out in the same manner as in Example 1. Table 1 shows the results.

Comparative Example 5

With the same commercially available zinc sulfide type electroluminescent phosphor as used in Example 8 (mean particle diameter: 50 $\mu$m), the moisture resistance test of the EL lamp and the blackening resistance test of the electroluminescent phosphor were carried out in the same manner as in Example 1. Table 1 shows the results.

## Table 1

| Example | Source of Phosphate | Metal Salt | pH before reaction | pH after reaction |
|---|---|---|---|---|
| 1 | $(NH_4)_3PO_4 \cdot 3H_2O$, 0.71g | $MgCl_2 \cdot 6H_2O$, 0.53g<br>$CaCl_2 \cdot 2H_2O$, 0.39g | 9 | 6 |
| 2 | $(NH_4)_3PO_4 \cdot 3H_2O$, 0.77g | $MgCl_2 \cdot 6H_2O$, 1.16g | 9 | 7 |
| 3 | $(NH_4)_3PO_4 \cdot 3H_2O$, 1.43g | $MgCl_2 \cdot 6H_2O$, 1.06g<br>$CaCl_2 \cdot 2H_2O$, 0.77g | 9 | 6 |
| 4 | $(NH_4)_3PO_4 \cdot 3H_2O$, 1.55g | $MgCl_2 \cdot 6H_2O$, 2.32g | 9 | 7 |
| 5 | $H_3PO_4$, 1M 7.6 ml<br>KOH, 1M 22.8 ml | $Mg(OCOCH_3)_2 \cdot 4H_2O$, 2.45 g | 9 | 7 |
| 6 | $H_3PO_4$, 1M 19.0 ml<br>$NH_4OH$, 1M 57.0 ml | $MgCl_2 \cdot 6H_2O$, 5.80g | 9 | 7 |
| 7 | $NaH_2PO_4 \cdot H_2O$, 9.63 g<br>$NH_4OH$, 1M 140 ml | $MgCl_2 \cdot 6H_2O$, 10.6g<br>$CaCl_2 \cdot 2H_2O$, 7.7g | 10 | 7 |
| 8 | $(NH_4)_3PO_4 \cdot 3H_2O$, 0.71g | $MgCl_2 \cdot 6H_2O$, 0.53g<br>$CaCl_2 \cdot 2H_2O$, 0.39g | 9 | 6 |

- Cont'd -

EP 0 333 053 B1

| Species | Coated Phosphate Amount (parts per 100 parts of phosphor to be coated) | Initial Luminance (nt) | Half Life (hr) | 10 nt Life (hr) | Blackening Resistance |
|---|---|---|---|---|---|
| Calcium magnesium phosphate | 0.9 | 77 | 110 | 2300 | ◯ |
| Magnesium phosphate | 0.8 | 76 | 108 | 2200 | ◯ |
| Calcium magnesium phosphate | 0.9 | 80 | 100 | 2000 | ◯ |
| Magnesium phosphate | 0.8 | 76 | 105 | 2000 | ◯ |
| Magnesium phosphate | 1.6 | 73 | 105 | 2000 | ◯ |
| Magnesium phosphate | 4.8 | 60 | 110 | 2300 | ◯ |
| Calcium magnesium phosphate | 20 | 46 | 115 | 2400 | ◯ |
| Calcium magnesium phosphate | 0.9 | 79 | 130 | 3000 | ◯ |

- Cont'd -

EP 0 333 053 B1

EP 0 333 053 B1

| | | | | |
|---|---|---|---|---|
| 9 | $(NH_4)_3PO_4 \cdot 3H_2O$, 0.39g | $MgC\ell_2 \cdot 6H_2O$, 0.58g | 8 | 7 |
| 10 | $Na_3PO_4 \cdot 12H_2O$, 1.45g | $MgSO_4 \cdot 7H_2O$, 1.41g | 9 | 7 |
| 11 | $(NH_4)_2HPO_4$, 0.55g | $Mg(NO_3)_2 \cdot 6H_2O$, 1.07g | 7 | 7 |
| 12 | $Na_3PO_4 \cdot 12H_2O$, 0.15g | $MgC\ell_2 \cdot 6H_2O$, 0.13g | 8 | 7 |
| 13 | $Na_3PO_4 \cdot 12H_2O$, 3.06g | $Ca(NO_3)_2 \cdot 4H_2O$, 2.86g | 9 | 7 |
| 14 | $Na_3PO_4 \cdot 12H_2O$, 2.94g | $SrC\ell_2 \cdot 6H_2O$, 3.09g | 9 | 7 |
| 15 | $K_3PO_4$, 1.59g | $BaC\ell_2 \cdot 2H_2O$, 2.74g | 9 | 7 |
| 16 | $(NH_4)_3PO_4 \cdot 3H_2O$, 1.14g | $Mg(NO_3)_2 \cdot 6H_2O$, 1.07g<br>$Sr(NO_3)_2$, 0.89g | 9 | 7 |
| 17 | $(NH_4)_3PO_4 \cdot 3H_2O$, 0.94g | $Mg(NO_3)_2 \cdot 6H_2O$, 0.89g<br>$BaC\ell_2 \cdot 2H_2O$, 0.85g | 9 | 7 |
| 18 | $(NH_4)_3PO_4 \cdot 3H_2O$, 1.19g | $MgC\ell_2 \cdot 6H_2O$, 0.58g<br>$Ca(NO_3)_2 \cdot 4H_2O$, 0.69g<br>$Sr(NO_3)_2$, 0.62g | 9 | 7 |

| | | | | |
|---|---|---|---|---|
| Magnesium phosphate | 0.4 | 76 | 105 | 2000 |
| Magnesium phosphate | 0.8 | 62 | 99 | 1700 |
| Magnesium hydrogen phosphate | 0.8 | 76 | 89 | 1900 |
| Magnesium phosphate | 0.08 | 81 | 66 | 2000 |
| Calcium phosphate | 2.5 | 52 | 80 | 1800 |
| Strontium phosphate | 3.5 | 51 | 75 | 1800 |
| Barium phosphate | 4.5 | 51 | 83 | 1700 |
| Strontium magnesium phosphate | 2 | 72 | 91 | 2000 |
| Barium magnesium phosphate | 2 | 70 | 90 | 1900 |
| Strontium calcium magnesium phosphate | 2 | 71 | 105 | 2100 |

- Cont'd -

EP 0 333 053 B1

| | | | | |
|---|---|---|---|---|
| 19 | $(NH_4)_3PO_4 \cdot 3H_2O$, 1.04g | $MgCl_2 \cdot 6H_2O$, 0.52g<br>$CaCl_2 \cdot 2H_2O$, 0.33g<br>$BaCl_2 \cdot 2H_2O$, 0.62g | 9 | 7 |
| 20 | $(NH_4)_3PO_4 \cdot 3H_2O$, 1.00g | $MgCl_2 \cdot 6H_2O$, 0.38g<br>$CaCl_2 \cdot 2H_2O$, 0.24g<br>$Sr(NO_3)_2$, 0.39g<br>$BaCl_2 \cdot 2H_2O$, 0.45g | 9 | 7 |
| 21 | $(NH_4)_3PO_4 \cdot 3H_2O$, 0.71g | $MgCl_2 \cdot 6H_2O$, 0.53g<br>$CaCl_2 \cdot 2H_2O$, 0.39g | 9 | 7 |
| Comp. Ex. 1 | – | – | – | – |
| Comp. Ex. 2 | $H_3PO_4$ | – | 2 | 3 |
| Comp. Ex. 3 | – | $Ba(OC_3H_7)_2$<br>$Ti(OC_3H_7)_4$ | – | – |
| Comp. Ex. 4 | – | – | – | – |
| Comp. Ex. 5 | – | – | – | – |

EP 0 333 053 B1

| Phosphate coating | | | | | |
|---|---|---|---|---|---|
| Barium calcium magnesium phosphate | ○ | 2100 | 105 | 68 | 2 |
| Barium strontium calcium magnesium phosphate | ○ | 2000 | 100 | 69 | 2 |
| Calcium magnesium phosphate | ○ | 2000 | 100 | 75 | 0.9 |
| – | x | 1000 | 20 | 82 | |
| Zinc phosphate | x | 1100 | 22 | 83 | 0.7 |
| Barium titanate | x | – | – | – | |
| – | x | 1200 | 25 | 115 | |
| – | x | 1300 | 35 | 83 | |

While the invention has been described in detail and with reference to specific embodiments thereof, it is apparent to one skilled in the art that various changes and modifications can be made therein without departing from the spirit and the scope of the present invention.

## Claims

1. A phosphate-coated electroluminescent phosphor for electroluminescent lamp comprising a zinc sulfide phosphor coated with at least one phosphate selected from the group consisting of magnesium phosphate, magnesium hydrogenphosphate, calcium phosphate, calcium hydrogenphosphate, barium phosphate, strontium phosphate, calcium pyrophosphate, strontium pyrophosphate, barium pyrophosphate, calcium magnesium phosphate, strontium magnesium phosphate, barium mag-

16

nesium phosphate, calcium magnesium pyrophosphate, strontium magnesium pyrophosphate, barium magnesium pyrophosphate, strontium calcium magnesium phosphate, barium calcium magnesium phosphate, strontium calcium magnesium pyrophosphate, barium calcium magnesium pyrophosphate, barium strontium calcium magnesium phosphate, barium strontium calcium magnesium pyrophosphate, strontium calcium phosphate, barium calcium phosphate, strontium calcium pyrophosphate, barium calcium pyrophosphate, barium strontium calcium phosphate, barium strontium calcium pyrophosphate, the composite phosphates thereof, the condensed phosphates thereof and the mixed phosphates thereof.

2. A phosphor as claimed in Claim 1, wherein the amount of the coating metal phosphate falls in the range satisfying the inequality;

$$0.007 \cdot \frac{d}{D_{50}} \cdot W_p \leq W_c \leq 1.5 \cdot \frac{d}{D_{50}} \cdot W_p$$

wherein $W_c$ represents the weight of coating metal phosphate (g), d the density of coating metal phosphate (g/cm$^3$), $D_{50}$ the mean particle diameter of the phosphor and $W_p$ the weight of phosphor (g).

3. A phosphor as claimed in Claim 1, wherein the mean particle diameter of the phosphor ranges from about 3 to about 60 $\mu$m.

4. A process for producing a phosphate-coated electroluminescent zinc sulfide phosphor for electroluminescent lamp which comprises dispersing a phosphor in an aqueous solution containing phosphate ions and alkali metal ions and/or ammonium ions, adding an aqueous solution of a salt of at least one metal selected from the group consisting of magnesium, calcium, strontium and barium to the resulting slurry while maintaining the pH value of the resulting mixture at 4 or more, coating the metal phosphate on the phosphor, then taking the phosphor from the aqueous solution by filtration, washing the coated phosphor with water and then calcining the coated phosphor.

5. A process as claimed in Claim 4, wherein said aqueous solution containing alkali metal ions and/or ammonium ions contains phosphate ions and any one of sodium ions, potassium ions and ammoniun ions.

6. A process as claimed in Claim 4, wherein the mixture containing the coated phosphor is subjected to heat treatment before the filtration.

7. A process as claimed in Claim 6, wherein the temperature for the heat treatment is between 90°C and 100°C.

**Patentansprüche**

1. Mit Phosphat beschichteter, elektrolumineszenter Phosphor für eine elektrolumineszente Lampe, umfassend einen Zinksulfidphosphor, der mit mindestens einem Phosphat aus der Gruppe Magnesiumphosphat, Magnesiumhydrogenphosphat, Calciumphosphat, Calciumhydrogenphosphat, Bariumphosphat, Stromtiumphosphat, Calciumpyrophosphat, Stromtiumpyrophosphat, Bariumpyrophosphat, Calciummagnesiumphosphat, Strontiummagnesiumphosphat, Bariummagnesiumphosphat, Calciummagnesiumpyrophosphat, Strontiummagnesiumpyrophosphat, Bariummagnesiumpyrophosphat, Strontiumcalciummagnesiumphosphat, Bariumcalciummagnesiumphosphat, Strontiumcalciummagnesiumpyrophosphat, Bariumcalciummagnesiumpyrophosphat, Bariumstrontiumcalciummagnesiumphosphat, Bariumstrontiumcalciummagnesiumpyrophosphat, Strontiumcalciumphosphat, Bariumcalciumphosphat, Strontiumcalciumpyrophosphat, Bariumcalciumpyrophosphat, Bariumstrontiumcalciumpyrophosphat, Verbundphosphate derselben, kondensierte Phosphate derselben und gemischte Phosphate derselben beschichtet ist.

**2.** Phosphor nach Anspruch 1, wobei die Menge des zum Beschichten verwendeten Metallphosphats in dem Bereich, der die folgende Ungleichung erfüllt, liegt:

$$0.007 \cdot \frac{d}{D_{50}} \cdot W_p \leq W_c \leq 1.5 \cdot \frac{d}{D_{50}} \cdot W_p$$

worin $W_c$ für das Gewicht des zum Beschichten dienenden Metallphosphats in Gramm steht, d die Dichte des zum Beschichten dienenden Metallphosphats in Gramm pro $cm^3$ darstellt, $D_{50}$ den mittleren Teilchendurchmesser des Phosphors und $W_p$ das Gewicht des Phosphors in Gramm bedeutet.

**3.** Phosphor nach Anspruch 1, wobei der mittlere Teilchendurchmesser des Phosphors im Bereich von etwa 3 bis etwa 60 $\mu$m liegt.

**4.** Verfahren zur Herstellung eines mit Phosphat beschichteten elektrolumineszenten Zinksulfidphosphors für eine elektrolumineszente Lampe, umfassend ein Dispergieren von Phosphor in einer wäßrigen Lösung mit Phosphationen und Alkalimetallionen und/oder Ammoniumionen,
Zugeben einer wäßrigen Lösung eines Salzes von mindestens einem Metall aus der Gruppe Magnesium, Calcium, Strontium und Barium zu der erhaltenen Aufschlämmung, wobei der pH-Wert des erhaltenen Gemisches bei 4 oder mehr gehalten wird, Beschichten des Phosphors mit dem Metallphosphat, anschließend Herausnehmen des Phosphors aus der wäßrigen Lösung durch Filtration, Waschen des beschichteten Phosphors mit Wasser und anschließend Calcinieren des beschichteten Phosphors.

**5.** Verfahren nach Anspruch 4, wobei die wäßrige Lösung mit Alkalimetallionen und/oder Ammoniumionen Phosphationen und entweder Natriumionen, Kaliumionen oder Ammoniumionen enthält.

**6.** Verfahren nach Anspruch 4, wobei das Gemisch mit dem beschichteten Phosphor vor der Filtration einer Wärmebehandlung unterworfen wird.

**7.** Verfahren nach Anspruch 6, wobei die Temperatur für die Wärmebehandlung zwischen 90 und 100 °C liegt.

**Revendications**

**1.** Substance fluorescente électroluminescente revêtue de phosphate pour une lampe électroluminescente comprenant une substance fluorescente au sulfure de zinc revêtue d'au moins un phosphate choisi dans le groupe consistant en phosphate de magnésium; hydrogénophosphate de magnésium; phosphate de calcium; hydrogénophosphate de calcium; phosphate de baryum; phosphate de strontium; pyrophosphate de calcium; pyrophosphate de strontium; pyrophosphate de baryum; phosphate de calcium et de magnésium; phosphtate de strontium et de magnésium; phosphate de baryum et de magnésium; pyrophosphate de calcium et de magnésium; pyrophosphate de strontium et de magnésium; pyrophosphate de baryum et de magnésium; phosphate de strontium, de calcium et de magnésium; phosphate de baryum, de calcium et de magnésium; pyrophosphate de strontium, de calcium et de magnésium; pyrophosphate de baryum, de calcium et de magnésium; phosphate de baryum, de strontium, de calcium et de magnésium; pyrophosphate de baryum, de strontium, de calcium et de magnésium; phosphate de strontium et de calcium; phosphate de baryum et de calcium; pyrophosphate de strontium et de calcium; pyrophosphate de baryum et de calcium; phosphate de baryum, de strontium et de calcium; pyrophosphate de baryum, de strontium et de calcium; les phosphates composites de ceux-ci, les phosphates condensés de ceux-ci et les phosphates mélangés de ceux-ci.

**2.** Substance fluorescente selon la revendication 1, dans laquelle la quantité du revêtement de phosphate métallique est dans le domaine satisfaisant l'inégalité:

$$0,007 \cdot \frac{d}{D_{50}} \cdot W_p \leq W_c \leq 1,5 \cdot \frac{d}{D_{50}} \cdot W_p$$

dans laquelle $W_c$ représente le poids de revêtement de phosphate métallique (g), d la masse volumique du revêtement de phosphate métallique (g/cm$^3$), $D_{50}$ le diamètre de particule moyen de la substance fluorescente et $W_p$ le poids de substance fluorescente (g).

3. Substance fluorescente selon la revendication 1, dans laquelle le diamètre de particule moyen de la substance fluorescente est compris entre environ 3 et environ 60 μm.

4. Procédé de préparation d'une substance fluorescente électroluminescente au sulfure de zinc revêtue de phosphate pour lampe électroluminescente qui comprend la dispersion d'une substance fluorescente dans une solution aqueuse contenant des ions phosphate et des ions de métaux alcalins et/ou des ions ammonium, l'ajout d'une solution aqueuse d'un sel d'au moins un métal choisi dans le groupe consistant en magnésium, calcium, strontium et baryum à la suspension résultante tout en maintenant la valeur du pH du mélange résultant à 4 ou plus, le revêtement de la substance fluorescente au moyen du phosphate métallique, puis l'obtention de la substance fluorescente à partir de la solution aqueuse par filtration, le lavage de la substance fluorescente revêtue avec de l'eau puis la calcination de la substance fluorescente revêtue.

5. Procédé selon la revendication 4, dans lequel ladite solution aqueuse contenant des ions de métaux alcalins et/ou des ions ammonium contient des ions phosphate et l'un quelconque des ions sodium, potassium et ammonium.

6. Procédé selon la revendication 4, dans lequel le mélange contenant la substance fluorescente revêtue est soumis à un traitement par la chaleur avant la filtration.

7. Procédé selon la revendication 6, dans lequel la température pour le traitement par la chaleur est comprise entre 90°C et 100°C.